# EUROPÄISCHE PATENTANMELDUNG

(11) **EP 1 300 663 A2**
(43) Veröffentlichungstag der Anmeldung: **09.04.2003**
(21) Anmeldenummer: 02019264.7
(22) Anmeldetag: 28.08.2002
(51) Int. Cl.: G01L 5/14, G01L 1/16

(54) **Piezoelektrische Vorrichtung zur Impulsmessung**

(30) Priorität: 02.10.2001 DE 10148678
(71) Anmelder: Glock, Gaston, 9220 Velden am Wörthersee (AT)
(72) Erfinder: Glock, Gaston, 9220 Velden am Wörthersee (AT)
(74) Vertreter: Haft, von Puttkamer, Berngruber, Czybulka

(57) **Zusammenfassung**

Eine piezoelektrische Vorrichtung weist einen Piezofilm Sensor (3) auf, der zwischen zwei Lagen (1.2 und 1.3) einer Mehrlagenplatine (1) mit gedruckter Schaltung (2.1, 2.2, 2.3 2.4) eingeschlossen ist.

## Beschreibung

Als piezoelektrische Sensoren werden zunehmend piezoelektrische Polymer-Sensoren oder Piezofilm-Sensoren verwendet, die bevorzugt aus Fluorpolymeren, insbesondere Polyvinylidenfluorid (PVDF) und Copolymeren von PVDF bestehen. Die Piezofilm-Sensoren bestehen aus einem Piezofilm-Stück oder -Plättchen, das auf beiden Seiten mit je einer Elektrodenschicht, beispielsweise einer Metallschicht, wie Silber, versehen sind.

Der Piezofilm-Sensor wird im allgemeinen an eine gedruckte Schaltung angeschlossen. Dabei werden wegen der hohen Schaltungsdichte vorzugsweise Mehrlagen- oder "Mulitlayer"-Platinen verwendet. Bei vielen Anwendungen steht für die Messstelle aus dem Filmsensor und der Platine jedoch nur wenig Platz zur Verfügung.

Aufgabe der Erfindung ist es daher, eine piezoelektrische Messstelle zu miniaturisieren.

Dies wird erfindungsgemäß mit der im Anspruch 1 gekennzeichneten piezoelektrischen Vorrichtung erreicht. In den Ansprüchen 2 und 3 sind bevorzugte Ausführungsformen der erfindungsgemäßen Vorrichtung wiedergegeben, und in den Ansprüchen 4 und 5 bevorzugte Anwendungen derselben.

Nach der erfindungsgemäßen Vorrichtung wird der Piezofilm-Sensor von den beiden benachbarten Lagen der Mehrlagenplatine umschlossen.

Damit ist der Piezofilm-Sensor vollkommen in die Platine integriert, also der Platz, den der Piezofilm-Sensor an der Messstelle einnimmt, eingespart, wodurch eine wesentliche Miniaturisierung der Messstelle erreicht wird. Zudem ist der Piezofilm-Sensor durch die Platine vor mechanischer Beschädigung geschützt.

Um einen großen Messimpuls zu erhalten, nimmt der Piezofilm-Sensor eine möglichst große Fläche zwischen den benachbarten Lagen der Platine ein. Das heißt, die Fläche des Piezofilm-Sensors beträgt vorzugsweise wenigstens ein Fünftel, insbesondere wenigstens ein Drittel, ganz besonders bevorzugt mehr als die Hälfte der Fläche der Platine. Durch seine Ausbildung als flexible Folie hält ein derart großflächig ausgebildeter Piezofilm-Sensor den Verformungen durch die mechanischen Impulse ohne weiteres stand. Die Dicke des Piezofilm-Sensors ist normalerweise geringer als die Dicke der benachbarten Lagen der Platine. Die Platine und der darin eingeschlossene Piezofilm-Sensor weisen vorzugsweise einen im wesentlichen rechteckigen Umriss auf. Die elektrischen Anschlüsse sind am Rand des Piezofilm-Sensors vorgesehen.

Wie sich herausgestellt hat, können an dem Piezofilm-Sensor Aussparungen angebracht werden, ohne seine Empfindlichkeit spürbar zu beeinträchtigen. Demgemäß kann der Piezofilm-Sensor mit Aussparungen für Durchkontaktierungen zwischen den Lagen der Platine versehen werden, ohne seine Funktion zu beeinträchtigen. Die Aussparungen können Ausnehmungen am Rand des im wesentlichen rechteckigen Piezofilm-Sensors oder Löcher in dem Piezofilm-Sensor sein.

Um eine hohe Empfindlichkeit sicherzustellen, ist der Piezofilm-Sensor vorzugsweise in wenigstens einer Ausnehmung in einer der beiden Lagen, zwischen denen er eingeschlossen ist, angeordnet.

Die erfindungsgemäße piezoelektrische Vorrichtung kann in vielfältiger Weise als Messstelle angewendet werden, bei der mechanische Impulse zur einer Verformung des Piezofilm-Sensors führen. Diese mechanischen Impulse können beispielsweise durch einen Schlag, Vibrationen oder Beschleunigungen hervorgerufen werden.

Der Piezofilm-Sensor kann auch als Datenempfangseinrichtung ausgebildet sein. So kann z. B. erfasst werden, ob wann und wie ein Gegenstand, Bewegungen, Stößen oder dergleichen ausgesetzt ist.

Nachstehend ist eine Ausführungsform der erfindungsgemäßen Vorrichtung und deren Anwendung an einem Schusszähler für Pistolen beispielhaft näher erläutert. Darin zeigen jeweils schematisch:
- Fig. 1: eine Mehrlagenplatine mit einem Piezofilm-Sensor im auseinandergezogenen Zustand; und
- Fig. 2: eine Pistole mit weggebrochenem Teil mit eingebauter Mehrlagenplatine nach Fig. 1 für einen Schusszähler.

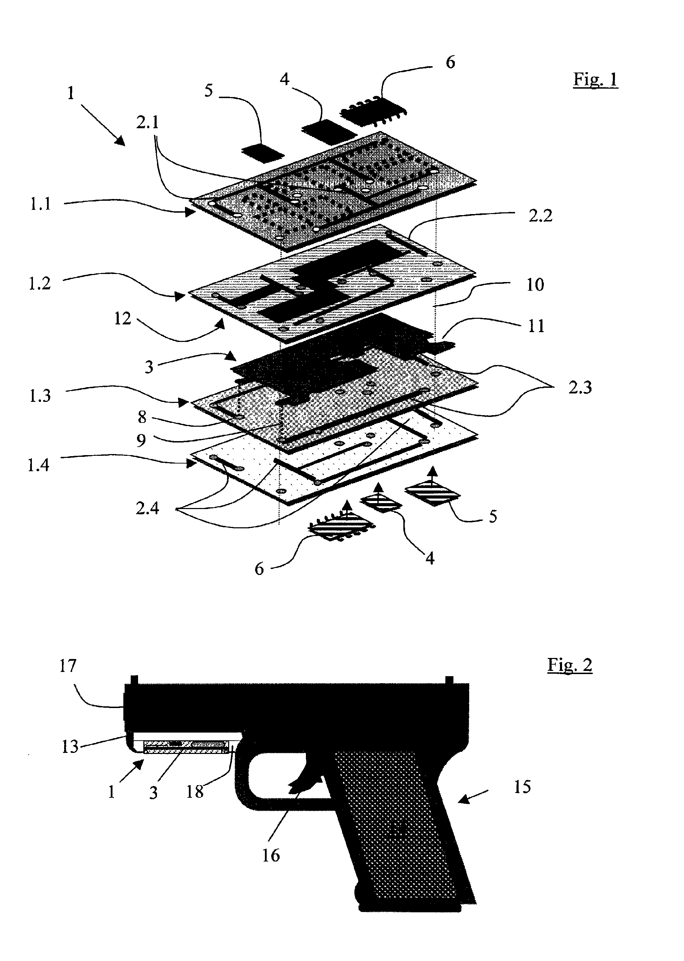

Gemäß Fig. 1 weist die rechteckige Mehrlagenplatine 1 vier Lagen 1.1, 1.2, 1.3 und 1.4 auf, die mit Leiterbahnen 2.1, 2.2, 2.3 und 2.4 versehen sind. Zwischen den inneren Lagen 1.2 und 1.3 ist ein Piezofilm-Sensor 3 eingeschlossen. Die Fläche des Piezofilm-Sensors 3 beträgt etwa die Hälfte der Fläche der einzelnen Lagen 1.1, 1.2, 1.3 und 1.4.

An die Leiterbahnen der äußeren Schichten 1.1 und 1.4 sind elektronische Bauteile, beispielsweise ein Kondensator 4, ein Widerstand 5 und ein IC-Chip 6 angeschlossen. Die Elektrodenschichten des Piezofilm-Sensors 3 sind z. B. an die Leiterbahnen 2.3 der Lage 1.3 angeschlossen, wie durch die gestrichelten Linien 8, 9 dargestellt.

Damit die Leiterbahnen 2.1 der Lage 1.1 und die Leiterbahnen 2.4 der Lage 1.4 kontaktiert werden können, ist, wie durch die gestrichelte Linie 10 dargestellt, in dem Piezofilm-Sensor 3 eine Ausnehmung 11 vorgesehen. Auch weist der Piezofilm-Sensor 3 mit im wesentlichen rechteckigem Umriss weitere Ausnehmungen an seinem Rand für nicht näher dargestellte Kontaktierungen zwischen den Leiterbahnen der Lagen 1.1 und 1.2 mit den Leiterbahnen der Lagen 1.3 und 1.4 auf der anderen Seite des Piezofilm-Sensors 3 auf.

Ferner kann in der dem Piezofilm-Sensor 3 zugewandten Seite der Lage 1.2 eine Ausnehmung 12 vorgesehen, die den Piezofilm-Sensor 3 aufnimmt.

Gemäß Fig. 2 ist die Platine 1 mit dem Piezofilm-Sensor 3 in dem Abschnitt 13 des Griffstücks 14 einer Pistole 15 zwischen dem Abzug 16 und der Laufmündung 17 in einer Ausnehmung 18 angeordnet. Beim Schuss wird durch den Rückstoßimpuls der Abschnitt 13 mit der Platine 1 und damit der Piezofilm-Sensor 3 verformt, wodurch der Piezofilm-Sensor ein Signal z. B. an den Chip 6 in der Lage 1.1 bzw. 1.4 abgibt, das im Speicher des Chip als Zählimpuls abgelegt wird. Die Anzahl der mit der Pistole 15 abgegebenen Schüsse kann mit einem nicht dargestellten Lesegerät zum Auslesen des Speichers ermittelt werden.

Die Platine 1 mit dem darin integrierten Piezofilm-Sensor 3 kann auch zur Schusszählung in anderen Schusswaffen eingesetzt werden, beispielsweise bei Gewehren in der Schaftkappe des Gewehrs.

## Patentansprüche

1. Piezoelektrische Vorrichtung mit einem Piezofilm-Sensor (3) und einer Mehrlagenplatine (1) mit gedruckter Schaltung (2.1, 2.2, 2.3, 2.4), **dadurch gekennzeichnet, daß** der Piezofilm-Sensor (3) zwischen den beiden banachbarten Lagen (1.2 und 1.3) der Platine (1) eingeschlossen ist.

2. Vorrichtung nach Anspruch 1, **dadurch gekennzeichnet, dass** die Fläche des Piezofilm-Sensors (3) mindestens ein Fünftel der Fläche jeder benachbarten Lage (1.2 und 1.3) beträgt.

3. Vorrichtung nach Anspruch 1, **dadurch gekennzeichnet, daß** der Piezofilm-Sensor (3) Aussparungen (11) für Durchkontaktierungen (10) zwischen den Lagen (1.2 und 1.3) aufweist, zwischen denen der Piezofilm-Sensor (3) angeordnet ist.

4. Vorrichtung nach Anspruch 1 oder 2, **dadurch gekennzeichnet, daß** wenigstens eine der beiden Lagen (1.2 und 1.3), zwischen denen der Piezofilm-Sensor (3) eingeschlossen ist, an der dem Piezofilm-Sensor (3) zugewandten Seite eine Ausnehmung (12) zur Aufnahme des Piezofilm-Sensors (3) aufweist.

5. Anwendung der piezoelektrischen Vorrichtung nach einem der vorstehenden Ansprüche als Meßstelle zur Messung mechanischer Impulse.

6. Anwendung nach Anspruch 5, **dadurch gekennzeichnet, daß** der mechanische Impuls, durch einen Schlag, Vibrationen oder eine Beschleunigung hervorgerufen wird.
